# EUROPÄISCHE PATENTSCHRIFT

(11) **EP 1 737 696 B1**
(45) Veröffentlichungstag und Bekanntmachung des Hinweises auf die Patenterteilung: **13.02.2008**
(21) Anmeldenummer: 05716567.2
(22) Anmeldetag: 09.04.2005
(51) Int. Cl.: B60N 2/225

(54) **BESCHLAG FÜR EINEN FAHRZEUGSITZ**
FITTING FOR A VEHICLE SEAT
GARNITURE D'UN SIEGE DE VEHICULE

(30) Priorität: 17.04.2004 DE 102004018744
(43) Veröffentlichungstag der Anmeldung: 03.01.2007
(73) Patentinhaber: KEIPER GmbH & Co. KG, 67657 Kaiserslautern (DE)
(72) Erfinder: ASSMANN, Uwe, 42857 Remscheid (DE)
(74) Vertreter: Patentanwälte Hosenthien-Held und Dr. Held
(86) Internationale Anmeldenummer: PCT/EP2005/003761
(87) Internationale Veröffentlichungsnummer: WO 2005/100079

(56) Entgegenhaltungen:
- DE-B4- 10 105 282
- US-A- 6 010 191
- US-A1- 2002 043 521

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 101 05 282 A1 ist ein Beschlag dieser Art bekannt, welcher als Neigungseinsteller für die Lehne eines Fahrzeugsitzes vorgesehen ist. Das erste Beschlagteil ist in den Ring gepresst, welcher das zweite Beschlagteil übergreift. Die durch den ersten Adapter hindurch angebrachte Schweißnaht läuft entlang der Grundlinie und verbindet erstes Beschlagteil, Ring und ersten Adapter gleichzeitig miteinander. Mittels der anwendungsangepassten Adapter wird der Beschlag bei der Endmontage an der Struktur des Fahrzeugsitzes befestigt.

Der Erfindung liegt die Aufgabe zu Grunde, einen Beschlag der eingangs genannten Art zu verbessern, insbesondere hinsichtlich der Herstellung. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß die Schweißnaht abschnittsweise auf verschiedenen Seiten der Grundlinie angeordnet ist, sind größere Toleranzen bei der Positionierung der Bauteile zueinander möglich, ohne daß dies die Verbindung beeinträchtigt. Die größeren Toleranzen erlauben eine weniger genaue und damit kostengünstigere Herstellung und Vorpositionierung der einzelnen Bauteile. Der abschnittsweise Verlauf der Schweißnaht auf den verschiedenen Seiten der Grundlinie wird ohne nennenswerte Mehrkosten erreicht. Der Verlauf der Schweißnaht ist vorzugsweise ein Pendeln um die Grundlinie, d.h. in Umfangsrichtung der Grundlinie betrachtet ein laufender Wechsel der Seiten, wobei vorzugsweise keine Hinterschneidungen auftreten, was eine einfache Herstellung mit einem unidirektionalen Vorschub in Umfangsrichtung ermöglicht. Der durch das Pendeln bedingte Wechsel erfolgt vorzugsweise mehrfach über den Umfang hinweg, beispielsweise ein Dutzend Mal.

Für eine einfache Herstellung der Schweißnaht verläuft diese vorzugsweise abschnittsweise im Material des ersten Beschlagteils und abschnittsweise im Material des Rings, wobei sie vorzugsweise durchgängig noch im Material des ersten Adapters verläuft. Die Schweißnaht kann in Umfangsrichtung des Beschlags umlaufend und geschlossen ausgebildet sein oder voneinander separierte Einzelabschnitte aufweisen, welche die Grundlinie jeweils wenigstens einmal kreuzen oder abwechselnd auf den beiden Seiten der Grundlinie angeordnet sind. Im Falle der Einzelabschnitte, welche einem gedachten pendelnden Verlauf folgen, wird in kleinen Bereichen für die Mehrfachverbindung der drei Bauteile gesorgt. In bevorzugter Ausführung verläuft die Grundlinie ringförmig, d.h. als Kreislinie, und die Schweißnaht pendelt periodisch um die Grundlinie, jedoch sind auch andere Symmetrien oder ein unsymmetrischer Verlauf möglich.

Bei einer Verbindung durch Schweißen ist das Laserschweißen bevorzugt, da dann gezielt und ohne Zusätze die Schweißnaht ausgebildet werden kann. Das Laserschweißen erfolgt dann vorzugsweise aus der gleichen Richtung wie die Anbringung des jeweiligen Adapters, also in der Regel durch diesen hindurch. Es ist auch möglich, anstelle der Verwendung eines gesondert ausgebildeten Adapters, beispielsweise anstelle desjenigen Adapters, welcher dem zweiten Beschlagteil zugeordnet ist, das betreffende Beschlagteil direkt an der Struktur anzubringen, so daß gegebenenfalls für die erfindungsgemäße Lehre das betreffende Strukturteil an die Stelle des gesonderten Adapters tritt. Der Begriff "Adapter" soll also im erfindungsgemäßen Sinne außer gesondert ausgebildeten Adaptern auch an Strukturteile angeformte Materialpartien oder die Strukturteile selber umfassen.

Der Beschlag wird als Einsteller in einem Fahzeugsitz verwendet, beispielsweise als Neigungseinsteller für die Lehne und/oder als Neigungseinsteller für das Sitzkissen und/oder zum Antrieb eines Höheneinstellers.

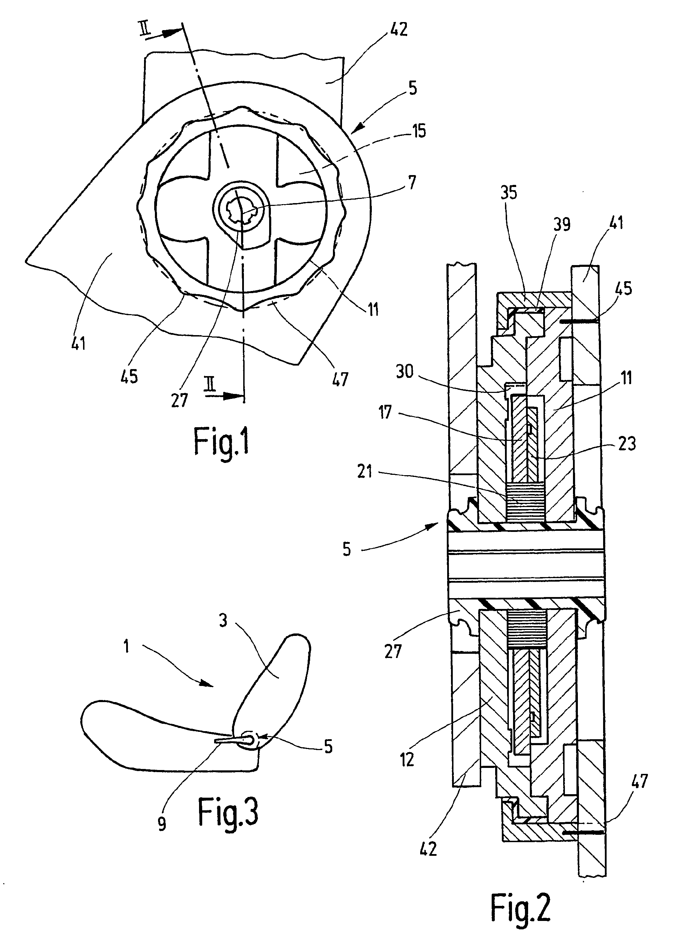

Im folgenden ist die Erfindung anhand eines in der Zeichnung dargestellten Ausführungsbeispiels näher erläutert. Es zeigen
- Fig. 1: eine Ansicht des Ausführungsbeispiels,
- Fig. 2: einen Schnitt entlang der Linie II-II in Fig. 1, und
- Fig. 3: einen schematisch dargestellten Fahrzeugsitz.

Ein Fahrzeugsitz 1 für ein Kraftfahrzeug weist für die Neigungseinstellung seiner Lehne 3 auf seinen beiden Seiten je einen Beschlag 5 auf, der als Rastbeschlag ausgebildet ist, aber auch als Getriebebeschlag ausgebildet sein könnte. Die beiden Beschläge 5 stehen mittels einer Übertragungsstange 7 miteinander in Getriebeverbindung. Ein drehfest auf der Übertragungsstange 7 sitzender Handhebel 9 dient der manuellen Betätigung der Beschläge 5. Die nachfolgenden Richtungsangaben beziehen sich auf das Zylinderkoordinatensystem, welches durch die horizontal und quer zur Fahrtrichtung angeordnete Übertragungsstange 7 definiert ist.

Der Beschlag 5 gleicht in seinem Aufbau demjenigen aus der DE 101 05 282 A1, deren Offenbarungsgehalt ausdrücklich einbezogen wird. Jeder Beschlag 5 weist ein näherungsweise scheibenförmiges erstes Beschlagteil 11 und ein ebenfalls näherungsweise scheibenförmiges zweites Beschlagteil 12 auf. Das nach der Endmontage sitzteilfeste erste Beschlagteil 11 führt mittels vier Führungs- und Lagersegmenten 15 zwei Zahnsegmente 17, die durch einen federbelasteten Exzenter 21 radial nach außen gedrückt und durch eine Mitnehmerscheibe 23 wieder radial nach innen gezogen werden. Der Exzenter 21 sitzt dabei auf einem Übertragungselement 27 aus Kunststoff, welches wiederum drehfest auf der Übertragungsstange 7 sitzt. Das als Hohlrad mit einem innen liegenden Zahnkranz 30 ausgebildete zweite Beschlagteil 12 ist auf den Außenflächen der Führungs- und Lagersegmente 15 gelagert, wobei sein Zahnkranz 30 zum Verriegeln des Beschlags 5 mit den Zahnsegmenten 17 zusammenwirkt. In einem entriegelten Zustand ist das zweite Beschlagteil 12 relativ zum ersten Beschlagteil 11 verdrehbar, und zwar vor dem Einbau in den Fahrzeugsitz 1 um 360°.

Im Falle einer Ausbildung des Beschlags 5 als selbsthemmender Getriebebeschlag wäre das zweite Beschlagteil 12 nahezu gleich ausgebildet, jedoch wäre am ersten Beschlagteil 11 ein Zahnrad ausgebildet, welches - von einem relativ zu ihm drehbaren Exzenter angetrieben - eine Abwälzbewegung am Zahnkranz 30 des zweiten Beschlagteils 12 durchführen würde, die sich als Drehbewegung mit überlagerter Taumelbewegung darstellt.

Ein Umklammerungsring, im folgenden kurz als Ring 35 bezeichnet, ist auf der radial nach außen weisenden Umfangsfläche des ersten Beschlagteils 11 und des zweiten Beschlagteils 12 angeordnet, wobei das erste Beschlagteil 11 in den Ring 35 fest eingepresst ist. Zum axialen Zusammenhalt der beiden Beschlagteile 11 und 12 übergreift der Ring 35 mit einem umgebördelten Rand das zweite Beschlagteil 12 radial. Zur Dämpfung und zum Toleranzausgleich bei vorgebenem Spiel ist zwischen zweitem Beschlagteil 12 und Ring 35 vorzugsweise ein Zwischenring 39 vorgesehen. Der Beschlag 5 wäre in diesem Zustand bereits transportfähig.

Für den späteren Einsatz des Beschlags 5 ist ein bestimmungsgemäß angepasster erster Adapter 41 und ein bestimmungsgemäß angepasster zweiter Adapter 42 am Beschlag 5 angebracht. Der zur Befestigung an der Lehne 3 vorgesehene zweite Adapter 42 wird durch Laserschweißen am zweiten Beschlagteil 12 auf der in axialer Richtung vom ersten Beschlagteil 11 abgewandten Stirnseite befestigt. Der zur Befestigung am Sitzteil vorgesehene erste Adapter 41 wird in axialer Richtung an das erste Beschlagteil 11 auf der vom zweiten Beschlagteil 12 abgewandten Seite angelegt, wobei er das erste Beschlagteil 11 bis auf eine zentrale Öffnung vollständig abdeckt. Es ist aber auch möglich, daß der erste Adapter 41 eine größere Öffnung vom Durchmesser des ersten Beschlagteils 11 aufweist und letzteres mit dieser Öffnung aufnimmt, wobei er auf einem vom Ring 35 gebildeten Absatz aufliegt.

Eine umlaufende (Laser-)Schweißnaht 45 zum Verbinden wird aus der gleichen Richtung kommend durch das Material des ersten Adapters 41, des ersten Beschlagteils 11 und des Rings 35 hindurch ausgebildet, also als Durchstechnaht, so daß diese drei Bauteile mittels eines Schweißvorgangs fest verbunden sind. Ausgehend von einer (kreis-)ringförmigen Grundlinie 47, welche durch die Anlagefläche des Rings 35 am ersten Beschlagteil 11 definiert wird, pendelt die Schweißnaht 45 um diese Grundlinie 47 herum in radialer Richtung, d.h. mit einer axialen Blickrichtung betrachtet hat sie eine Wellenform, während sie in Umfangsrichtung betrachtet oszilliert. Im Regelfall einer durchgehenden Schweißnaht 45 verläuft diese somit außer durchgängig im Material des ersten Adapters 41 noch abschnittsweise im Material des ersten Beschlagteils 11 und abschnittsweise im Material des Rings 35, wobei die Grundlinie 47 mehrfach gekreuzt wird. Es werden also die genannten drei Bauteile (erstes Beschlagteil 11, Ring 35, erster Adapter 41) durch eine einzige Schweißnaht 45 miteinander verbunden. In abgewandelter Form ist die Schweißnaht 45 nicht durchgehend ausgebildet, sondern besteht nur aus voneinander separierten Einzelabschnitten, beispielsweise den die Grundlinie 47 kreuzenden Abschnitten, wodurch weiterhin die genannten drei Bauteile miteinander verbunden werden. Das Pendeln der Schweißnaht 45 erfolgt periodisch, also mit einer gewissen Symmetrie, allerdings vorliegend von einer Sinusform abweichend.

### Bezugszeichenliste

- 1: Fahrzeugsitz
- 3: Lehne
- 5: Beschlag
- 7: Übertragungsstange
- 9: Handhebel
- 11: erstes Beschlagteil
- 12: zweites Beschlagteil
- 15: Führungs- und Lagersegment
- 17: Zahnsegment
- 21: Exzenter
- 23: Mitnehmerscheibe
- 27: Übertragungselement
- 30: Zahnkranz
- 35: Ring
- 39: Zwischenring
- 41: erster Adapter
- 42: zweiter Adapter
- 45: Schweißnaht
- 47: Grundlinie

## Patentansprüche

1. Beschlag für einen Fahrzeugsitz, insbesondere für einen Kraftfahrzeugsitz, mit einem ersten Beschlagteil (11), einem relativ zum ersten Beschlagteil (11) verdrehbaren zweiten Beschlagteil (12), einem Ring (35), welcher die beiden Beschlagteile (11, 12) in axialer Richtung zusammenhält und dessen Anlagefläche am ersten Beschlagteil (11) eine Grundlinie (47) definiert, und einem ersten Adapter (41), wobei das erste Beschlagteil (11), der Ring (35) und der erste Adapter (41) durch wenigstens eine in ihrem Material verlaufende, gemeinsame Schweißnaht (45) miteinander fest verbunden sind, **dadurch gekennzeichnet, daß** die Schweißnaht (45) abschnittsweise auf verschiedenen Seiten der Grundlinie (47) angeordnet ist.

2. Beschlag nach Anspruch 1, **dadurch gekennzeichnet, daß** die Schweißnaht (45) um die Grundlinie (47) pendelt.

3. Beschlag nach Anspruch 1 oder 2, **dadurch gekennzeichnet, daß** die Schweißnaht (45) abschnittsweise im Material des ersten Beschlagteils (11) und abschnittsweise im Material des Rings (35) verläuft.

4. Beschlag nach einem der Ansprüche 1 bis 3, **dadurch gekennzeichnet, daß** die Schweißnaht (45) im Material des ersten Adapters (41) durchgängig verläuft.

5. Beschlag nach einem der Ansprüche 1 bis 4, **dadurch gekennzeichnet, daß** die Schweißnaht (45) in Umfangsrichtung des Beschlags (5) umlaufend und geschlossen ausgebildet ist.

6. Beschlag nach einem der Ansprüche 1 bis 4, **dadurch gekennzeichnet, daß** die Schweißnaht (45) voneinander separierte Einzelabschnitte aufweist, welche die Grundlinie (47) wenigstens einmal kreuzen oder abwechselnd auf den beiden Seiten der Grundlinie angeordnet sind.

7. Beschlag nach einem der Ansprüche 1 bis 6, **dadurch gekennzeichnet, daß** die Grundlinie (47) ringförmig verläuft.

8. Beschlag nach einem der Ansprüche 1 bis 7, **dadurch gekennzeichnet, daß** die Schweißnaht (45) periodisch um die Grundlinie (47) pendelt.

9. Beschlag nach einem der Ansprüche 1 bis 8, **dadurch** gekennzeichent, daß die Schweißnaht (45) durch Laserschweißen von der vom zweiten Beschlagteil (12) abgewandten Seite des Beschlags (5) her ausgebildet ist.

10. Beschlag nach einem der Ansprüche 1 bis 9, **dadurch** gekennzeichent, daß der erste Adapter (41) der Befestigung des Beschlags (5) an der Struktur des Fahrzeugsitzes (1) dient.

11. Fahrzeugsitz (1) mit einer Lehne (3), **gekennzeichnet durch** einen Beschlag (5) nach einem der Ansprüche 1 bis 10 zur Neigungseinstellung der Lehne (3).

## Claims

1. Fitting for a vehicle seat, in particular for a motor vehicle seat, having a first fitting part (11), a second fitting part (12) being rotable relative to the first fitting part (11), and a ring (35) which holds the two fitting parts (11, 12) together in the axial direction and whose contact surface with the first fitting part (11) defines a baseline (47), and a first adapter (41), wherein the first fitting part (11), the ring (35) and the first adapter (41) being firmly connected to one another by means of at least one common weld seam (45) running in their material, **characterized in that** the weld seam (45) is arranged, sectionwise, on different sides of the baseline (47).

2. Fitting according to Claim 1, **characterized in that** the weld seam (45) swings across the baseline (47).

3. Fitting according to Claim 1 or 2, **characterized in that** the weld seam (45) runs, sectionwise, in the material of the first fitting part (11) and, sectionwise, in the material of the ring (35).

4. Fitting according to one of Claims 1 to 3, **characterized in that** weld seam (45) runs continuously in the material of the first adapter (41).

5. Fitting according to one of Claims 1 to 4, **characterized in that** the weld seam (45) is continuous and closed in the circumferential direction of the fitting (5).

6. Fitting according to one of Claims 1 to 4, **characterized in that** the weld seam (45) has individual sections separate from one another and crossing the baseline (47) at least once, or are arranged alternately on either side of the baseline.

7. Fitting according to one of Claims 1 to 6, **characterized in that** the baseline (47) is in the form of a ring.

8. Fitting according to one of Claims 1 to 7, **characterized in that** the weld seam (45) swings periodically across the baseline (47).

9. Fitting according to one of Claims 1 to 8, **characterized in that** the weld seam (45) is formed by laser welding from that side of the fitting (5) that faces away from the second fitting part (12).

10. Fitting according to one of Claims 1 to 9, **characterized in that** the first adapter (41) serves to attach the fitting (5) to the structure of the vehicle seat (1).

11. Vehicle seat (1) with a backrest (3), **characterized by** a fitting (5) according to one of Claims 1 to 10 for adjusting the inclination of said backrest (3).

## Revendications

1. - Armature pour un siège de véhicule, en particulier pour un siège de véhicule automobile, comportant un premier élément d'armature (11), un second élément d'armature (12) pouvant pivoter par rapport au premier élément d'armature (11), une bague (35), laquelle maintient les deux éléments d'armature (11, 12) dans la direction axiale et dont la surface d'appui sur le premier élément d'armature (11) définit une ligne de base (47), et un premier adaptateur (41), le premier élément d'armature (11), la bague (35) et le premier adaptateur (41) étant reliés solidement entre eux par au moins un cordon de soudure (45) commun s'étendant dans leur matériau, **caractérisée par le fait que** le cordon de soudure (45) est disposé par sections sur différents côtés de la ligne de base (47).

2. - Armature selon la revendication 1, **caractérisée par le fait que** le cordon de soudure (45) oscille autour de la ligne de base (47).

3. - Armature selon l'une des revendications 1 ou 2, **caractérisée par le fait que** le cordon de soudure (45) s'étend par sections dans le matériau du premier élément d'armature (11) et par sections dans le matériau de la bague (35).

4. - Armature selon l'une des revendications 1 à 3, **caractérisée par le fait que** le cordon de soudure (45) s'étend d'une manière générale dans le matériau du premier adaptateur (41).

5. - Armature selon l'une des revendications 1 à 4, **caractérisée par le fait que** le cordon de soudure (45) est réalisé circulaire et fermé dans la direction périphérique de l'armature (5).

6. - Armature selon l'une des revendications 1 à 4, **caractérisée par le fait que** le cordon de soudure (45) présente des sections individuelles séparées les unes des autres, lesquelles croisent la ligne de base (47) au moins une fois ou sont disposées en alternance sur les deux côtés de la ligne de base.

7. - Armature selon l'une des revendications 1 à 6, **caractérisée par le fait que** la ligne de base s'étend en forme d'anneau.

8. - Armature selon l'une des revendications 1 à 7, **caractérisée par le fait que** le cordon de soudure (45) oscille périodiquement autour de la ligne de base (47).

9. - Armature selon l'une des revendications 1 à 8, **caractérisée par le fait que** le cordon de soudure (45) est réalisé par soudage au laser par le côté de l'armature (5) opposé au second élément d'armature (12).

10. - Armature selon l'une des revendications 1 à 9, **caractérisée par le fait que** le premier adaptateur (41) sert à fixer l'armature (5) à la structure du siège de véhicule (1).

11. - Siège de véhicule (1) comportant un dossier (3), **caractérisé par** une armature (5) telle que définie à l'une des revendications 1 à 10 pour le réglage de l'inclinaison du dossier (3).
